# EUROPEAN PATENT APPLICATION

(11) **EP 2 172 921 A2**
(43) Date of publication of application: **07.04.2010**
(21) Application number: 09170499.9
(22) Date of filing: 17.09.2009
(51) Int. Cl.: G09B 7/00

(54) **Automatic educational assessment service**

(30) Priority: 25.09.2008 US 237692
(71) Applicant: Xerox Corporation, Rochester, New York 14644 (US)
(72) Inventor: Deyoung, Dennis C, Webster, NY 14580 (US); Baxter, Charles A, Rochester, NY 14612 (US); Campanelli, Michael R, Webster, NY 14580 (US); German, Kristine A, Webster, NY 14580 (US); Harrington, Steven J, Webster, NY 14580 (US); Lofthus, Robert M, Webster, NY 14580 (US); Singh Minhas, Rajinderjeet, Churchville, NY 14428 (US); Tredoux, Gavan, Penfield, NY 14526 (US); Venable, Dennis L, Marion, NY 14505 (US); Zehler, Peter J, Penfield, NY 14526 (US)
(74) Representative: Skone James, Robert Edmund

(57) **Abstract**

A method and system for automatically helping a teacher/educator evaluate assessments administered to students for determining student's attributes. The teacher/educator reviews stored assessment forms at a digital user interface (DUI) at a multifunction device (MFD) and selects the desired forms and creates an Assessment Batch which includes a List of Students to be given the forms for marking. The system automatically codes each form with personalized student information and prints the individualized assessment forms. The teacher/educator administers the assessment and assessment forms are manually marked, collected and scanned at the MFD, entered into storage and the marked images automatically analyzed and the assessments automatically evaluated from stored rubrics and the teacher/educator is automatically notified by email that the evaluation has been performed. The system enables the teacher/educator to review the evaluations remotely and validate/annotate the evaluation and update the records in storage. The Assessment Batch may be created for a list of students in a group, a class, a grade level, a school, a plurality of schools and students in a geographical area.

## Description

### BACKGROUND

The present disclosure relates to the process of assessing the attributes of a student or group of students at selected times during their learning process and particularly relates to the assessment and evaluation of student attributes or progress in a structured classroom where a teacher is required to educate the students to a level of proficiency in various subject matters and at particular grade levels. Typically, in a grade level classroom, the teacher periodically gives the students printed form assessments or tests, as they have previously been referred to, in order to obtain an indication of the student(s) level(s) of proficiency in the subject matter of immediate interest.

Heretofore, where a teacher was responsible for a class having a relatively large number of students, the teacher typically passed out to all students a common assessment form. The assessments are distributed to the students who then mark their responses on the forms which are then gathered by the teacher and individually reviewed and evaluated or graded by the teacher.

The process has required the teacher to then manually enter an overall metric of each student's performance on the assessment into a record book or computer data base. Typically the metric is a single total score or percentage of possible points. This process has thus been time consuming and often requires the teacher to spend considerable time outside of the classroom performing these functions. Furthermore, no detailed record is kept regarding how each student performed on each item within the assessment. Given the low resolution metric recorded for each assessment, the recorded results do not fully or meaningfully determine the state of learning of individual students who may be experiencing learning difficulties or are insufficiently prepared for particular elements of the assessment. For example, all students whose total score is 60/100 on an assessment are most likely not making the same incorrect or correct answers, but it is not possible to differentiate their performance if only total scores are recorded

Thus, it has been desired to provide a way or means of automatically scoring and recording detailed assessment results for students in a relatively large class, thereby eliminating the need for manually scoring and entering the results of the evaluations in a record book or database, and eliminating the loss of critical data inherent in the practice of recording only total scores or percentages.

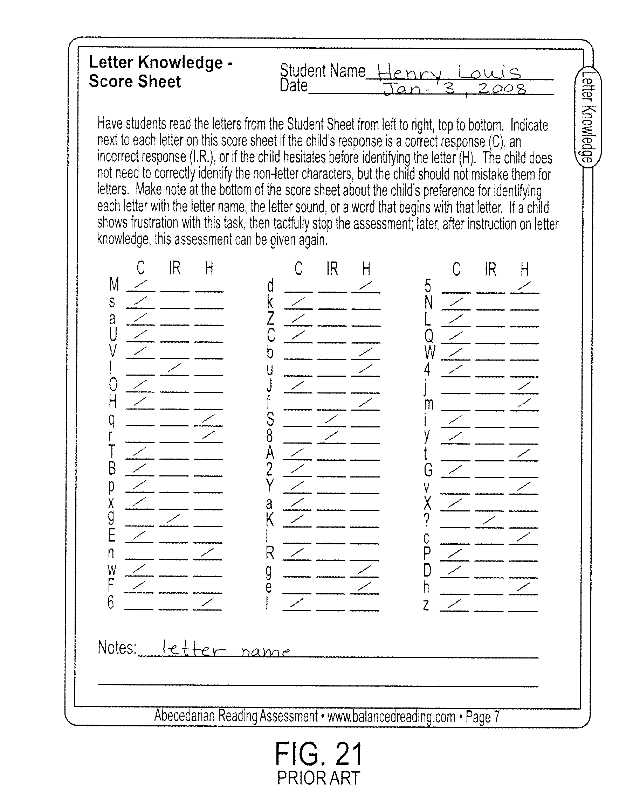

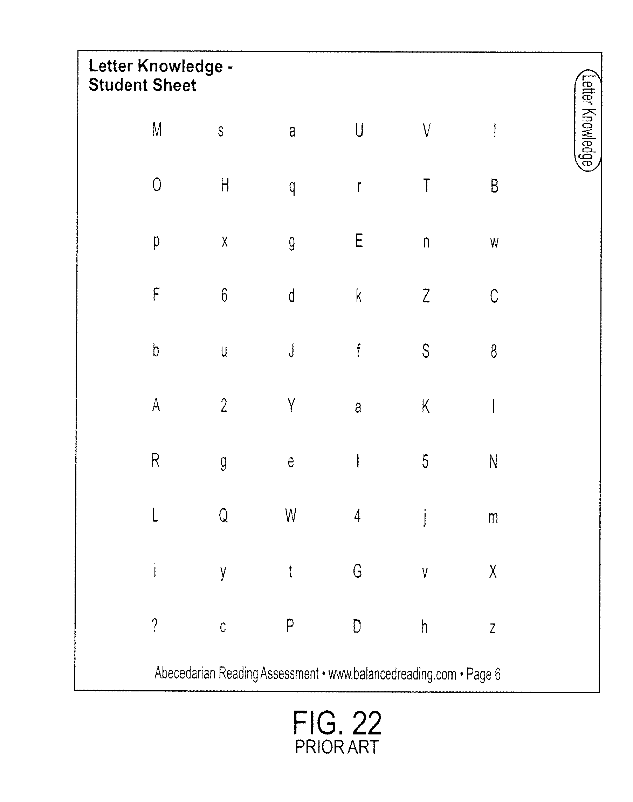

Heretofore, one type of known assessment employed by a teacher for enabling a teacher/educator to evaluate the ability of a student to name a printed letter, is illustrated in FIGURES 21-22 wherein the student is asked to read a letter from a prepared form containing various letters of the alphabet as seen in FIGURE 22; and, as the student reads the letters, the teacher manually marks on a separate form, as seen in FIGURE 21, the student's response. In the example shown in FIGURE 21, the teacher makes a manual mark (shown as a "/") in one of the columns headed "C" for correct, "IR" for incorrect response, and "H" if the child hesitates before identifying the letter. Provision is made at the bottom of the teacher's form for entering comments or notes. The teacher must then transcribe the results of the markings on the assessment of FIGURE 21 into a data base or grade book in order to have a record of the student's state of learning or progress at that time with respect to the particular subject matter.

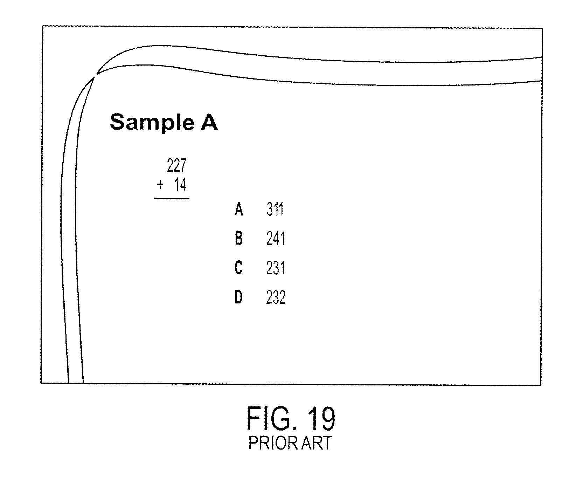

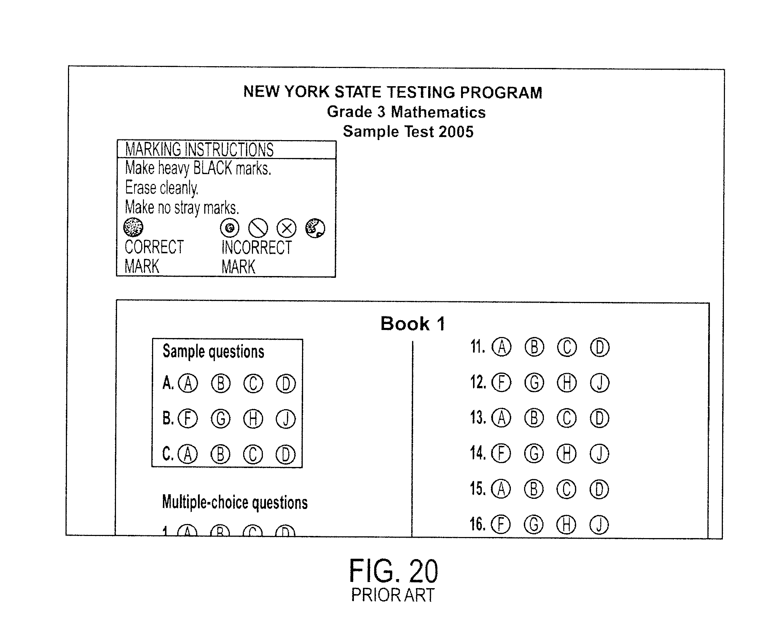

FIGURES 19 and 20 illustrate an example of prior art assessments employed for determining the state of learning/knowledge of a student with respect to arithmetic in which the student is required to perform a mathematical addition exercise in a workbook, as seen in FIGURE 19, and then to fill-in the corresponding bubble in the accompanying answer sheet, as seen in FIGURE 20. This fill-in-the-bubble assessment form is amenable to machine scoring but is not suitable for young students. Additionally, many assessments cannot be presented in a fill-in-the-bubble format.

### BRIEF DESCRIPTION

The present disclosure describes a system for automatically evaluating assessments of the type given by a teacher/educator for determining the state of learning or progress of students during the course of instructions; and, the system is applicable particularly in a classroom setting where the teacher is responsible for educating a relatively large group of students. The system and technique of the present disclosure enables the teacher/educator to select from the digital user interface (DUI) of a Multifunction Device (MFD) any of multiple predetermined stored assessment forms in a Data Warehouse/Repository of such assessment forms for administration to a teacher/educator selected group of one or more students.

The teacher then requests the system to create an Assessment Batch and to print out personalized versions of the assessment form, where each version is automatically bar coded for the individual student. The student's name is also printed on the form for the purpose of delivering each assessment to the appropriate student. If desired, the student's name may be printed on the reverse side of the form such as, for example in large print, such that the person administering the test can verify from a distance that each student has the correct form, and so that forms can be handed out individually without disclosing the content of the assessment.

Once the students have completed the assessment, or alternatively where the teacher/educator marks the assessment for students' oral response, the marked assessment forms are then scanned into the system at the MFD.

Based on the information bar coded on the scanned forms, the system then identifies the student and Assessment Batch. The system then employs the appropriate image analysis of the markings, and performs an evaluation of each item on each of the assessments based upon a pre-programmed rubric. The system then automatically stores a preliminary evaluation in the Data Warehouse/Repository for each student. The teacher/educator may then view the assessments at a remote terminal and validate/annotate them. The system then automatically updates the validated/annotated assessment records in the Data Warehouse/Repository (DW/R) for later retrieval in various report views, which may be retrieved at the MFD or remotely by the teacher or other authorized educator.

### BRIEF DESCRIPTION OF THE DRAWINGS

FIGURE 1 is a pictorial diagram of the method flow of the present disclosure;

FIGURE 2 is a diagram of the general configuration of the system architecture of the present disclosure;

FIGURE 3 is a flow diagram of the initial portions of the process of the present disclosure for Assessment Batch formation, printing and manual marking;

FIGURE 4a is a similar flow diagram of a continuation of the process from FIGURE 3 for the scanning of assessments and the determination of the status of the scanned Assessment Batch(es);

FIGURE 4b is a continuation of FIGURE 4a and includes the option of updating any Batch Preliminary Evaluation status from Pending to Ready;

FIGURE 5 is a continuation of the process of FIGURE 4b including the automatic lifting of markings and automatic evaluation of the assessment items;

FIGURE 6 is a continuation of the process of FIGURE 5 including teacher correction, annotation and validation;

FIGURE 7 is a continuation of the process of FIGURE 6 including generation of reports;

FIGURE 8 is an example of an assessment for determining a student's state of learning or ability with respect to letter and word sounds and is of the type requiring image analysis for evaluation ;

FIGURE 9 is an example assessment items for determining a student's ability to scribe arithmetic numerals and requiring image analysis for evaluation;

FIGURE 10 is an assessment item for determining the student's skills in performing a mathematical operation and requiring image analysis for evaluation;

FIGURE 11 is another example of assessment items for determining student's capability in counting and numeral writing readiness for mathematics instruction and requiring image analysis for evaluation;

FIGURE 12 is another example of an assessment item wherein the student must draw a line to the correct election of symbols and requiring image analysis for evaluation;

FIGURE 13 is another example of assessment items wherein the student is required to encircle the correct symbol requiring image analysis for evaluation;

FIGURE 14 is another completed example of an assessment requiring the student to encircle more than one set of symbols and requiring image analysis for evaluation;

FIGURE 15 is another example of the type of assessment item shown in FIGURE 13 prior to marking by the student and requiring image analysis for evaluation;

FIGURE 16 is an example of an assessment wherein the student must recognize the commonality of the name of the illustrated object and the letter and requires image analysis for evaluation;

FIGURE 17 presents another exemplary assessment employed to in the present disclosure to determine the student's capability to manually reproduce a picture and requires image analysis for evaluation;

FIGURE 18 is another example of an assessment wherein the student must choose and circle images based upon the student's recognition of the object and understanding of the question asked relating to the images and requires image analysis for evaluation;

FIGURE 19 is an example excerpt from of a prior art assessment relating to a workbook for a multiple choice fill-in-the-bubble format exam;

FIGURE 20 is an example excerpt from of a prior art assessment fill-in-the-bubble answer sheet corresponding to the workbook in FIGURE 19;

FIGURE 21, excerpted from "The Abecedarian Reading Assessment" by Sebastian Wren and Jennifer Watts, is an example of an assessor completed and marked prior art assessment;

FIGURE 22, excerpted from "The Abecedarian Reading Assessment" by Sebastian Wren and Jennifer Watts, is a student hand-out sheet for use administering the assessment of FIGURE 21;

FIGURE 23 is an exemplary assessment item for use with the present method of the type for determining student preferences and requires image analysis for evaluation; and,

FIGURE 24 is an exemplary assessment item of the type for determining a student's area of interest and requires image analysis for evaluation.

### DETAILED DESCRIPTION

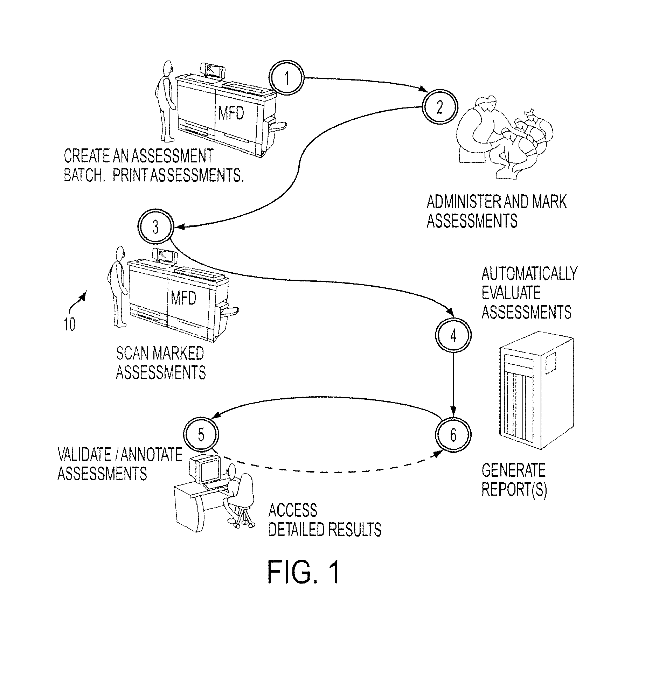

Referring to FIGURE 1, an overview of the functional operation of the method of the present disclosure is illustrated wherein at station 1 the multifunctional device (MFD) is provided for the teacher/educator to input the information required regarding the assessment form and student or number of students desired to create an Assessment Batch; and, once the Assessment Batch has been created in the system by teacher/educator input at the DUI (digital user interface) of the MFD, the assessments may be also printed at the MFD or any remote printer connected thereto. In the present practice, an Assessment Batch includes the teacher's name and a student list which includes the names of the students to be included in the batch, the particular assessment form to be administered to the students in the student list and the creation date of the Assessment Batch.

At station 2 of the system indicated generally at 10 in FIGURE 1, the teacher/educator administers the assessments which are marked. Depending on type of the assessment, the printed sheets may be marked by the teacher/educator or the students according to the nature of the assessment.

At station 3, the teacher/educator or their designated representative, scans the marked assessments into the system at the MFD. At station 4, the system automatically evaluates the assessments employing image analysis according to the established rubrics associated with the assessment form associated with the Assessment Batch and enables the teacher to access the evaluations at station 5 which is illustrated as a remote station such as a teacher's personal computer (PC). The teacher/educator validates/annotates the assessments and upon receipt of the validation, the system generates reports at station 6 which may be accessed and viewed at either the MFD or the teacher's personal computer terminal remote from the MFD.

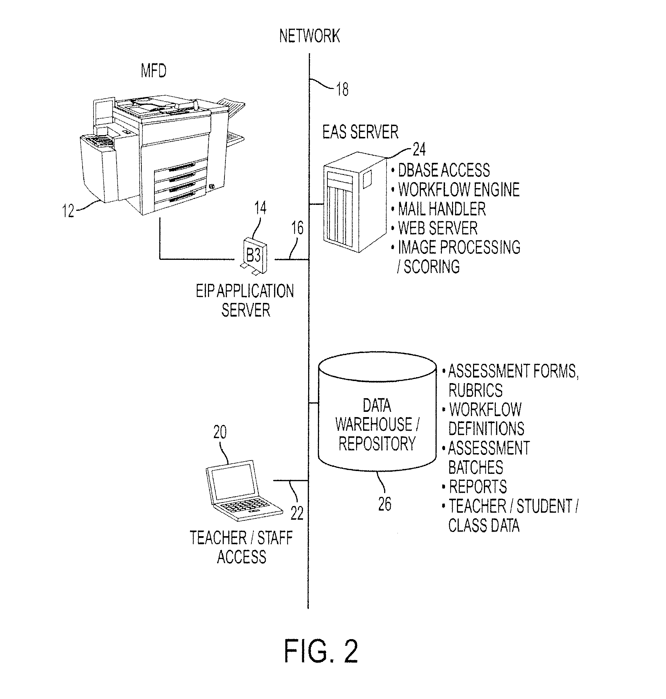

Referring to FIGURE 2, the overall architecture of the system employed with the present method is illustrated pictorially with the MFD 12 connected through an application server 14 along line 16 to a network 18 which may be either a local or wide area network and may include connections to the internet. A remote terminal or PC 20 such as a teacher/educator access terminal is connected along line 22 to the network 18. A system server 24 is also connected to the network 18 and provides the functions of database access, serves as a workflow engine, mail handler, web server and functions of image processing/scoring.

A Data Warehouse/Repository 26 is also connected to the network and contains such items as assessment forms and associated rubrics, workflow definitions, Assessment Batch records, reports and teacher/student/class data and is operable to receive updates and to provide for access to data stored therein remotely therefrom over network 18.

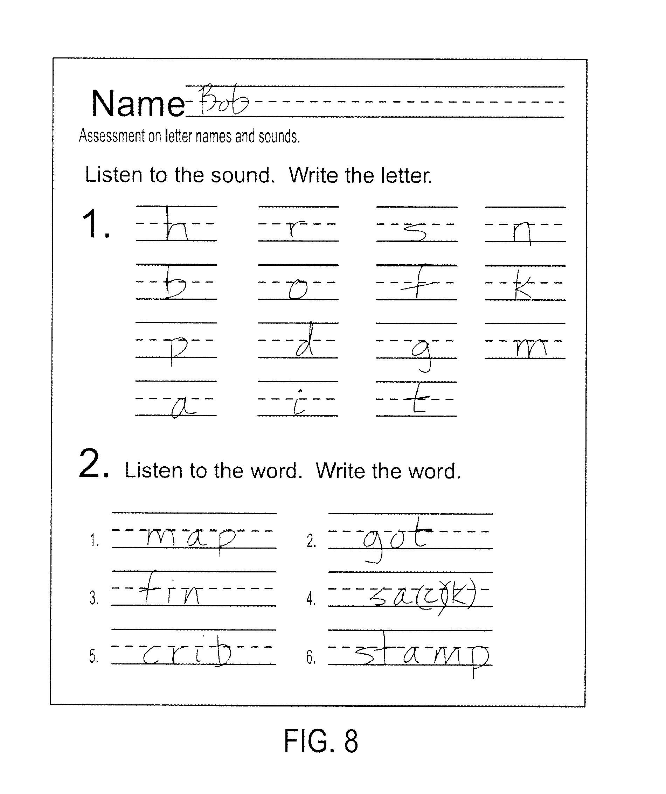

As mentioned hereinabove, the system and method of the present disclosure function to assist a teacher/educator by providing automatic evaluation of assessments administered to students based upon established rubrics programmed into the system and employing image analysis. The system and method of the present disclosure have the capability to evaluate assessments which are marked with images other than by marking within a box or bubble with respect to multiple choice answers. The system has the ability to scan the marked assessment and lift the manually made marks made during the administering of the assessment from the preprinted markings on the assessment sheet. The system and method then employ image analysis to identify and evaluate the lifted marks. The method and system are capable of handling numerous types of assessment items employed by teachers/educators examples of which are illustrated in the present disclosure in FIGURES 8-22.

Various types of assessments may be administered to the students and may include summative, formative, diagnostic, interest, preference and benchmark assessments.

Referring to FIGURE 8, an assessment is illustrated wherein the teacher/educator or person administering the assessment orally recites sounds associated with letters of the alphabet and the student is challenged in section one to identify the letter associated with the pronounced sound and to scribe the letter onto the assessment sheet. In section 2 of FIGURE 8, the teacher/educator or person administering the assessment recites a word and the student is challenged to write or print the word that was pronounced. In item 4 of section 2 of FIGURE 8, the word "sack" has been pronounced by the teacher. The system by virtue of image analysis can identify alternatives that the student would print in recognition such as, for example phonetic spellings "sak" or "sac" for which the student would be given credit for correctly identifying the phoneme. In item 5 of section 2 of FIGURE 8, the work "crib" has been pronounced; and, the student in recognizing the word associated with the pronunciation may write the word "krib" as phonetically spelling what the student heard, in which case the student would be given credit for correctly recognizing the word albeit incorrectly spelling the word. The system of the present disclosure by virtue of image analysis would be capable of identifying the spelling "krib" as a phonetic spelling of the pronounced word.

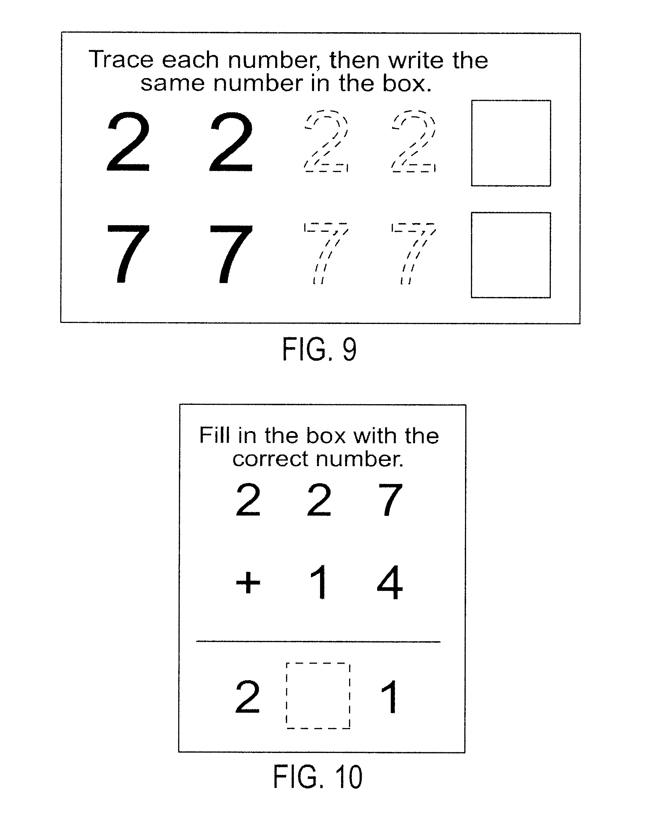

Referring to FIGURE 9, additional assessment items are illustrated in which the student is challenged to replicate by hand the shape of a number within a defined space and the system is then required to recognize and identify the drawing by the student as to its similarity to the number by image analysis.

FIGURE 10 illustrates an assessment item of the type requiring the student to perform a mathematical operation, such as addition, and to write the correct numeric answer in the appropriate digit space provided as blank. Thus, the system employing the method of the present disclosure operates to recognize the image created by the student of the numerical answer in order to provide an automatic evaluation of the assessment item.

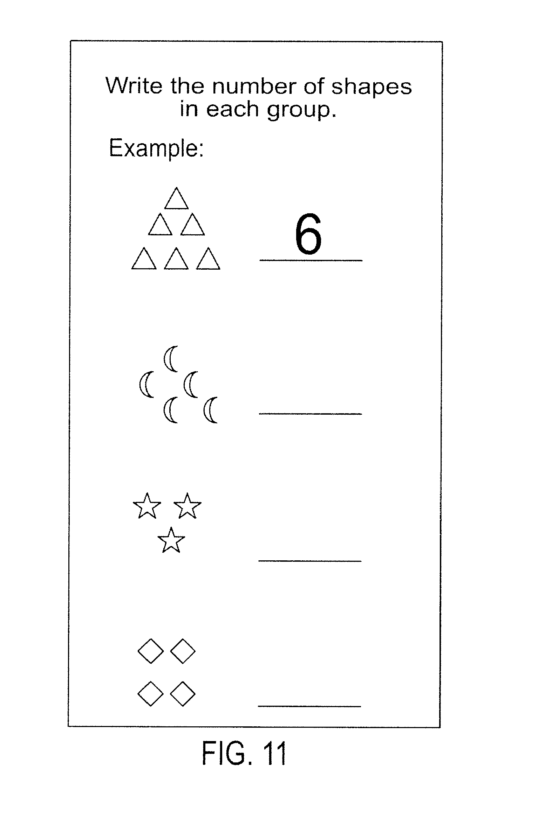

Referring to FIGURE 11, exemplary assessment items are illustrated wherein the student is challenged to recognize the number of shapes presented in the drawing and to write or scribe the correct numeral associated with the shape count. The system of the present disclosure then determines by image analysis whether the marking by the student is the correct numeral for the problem.

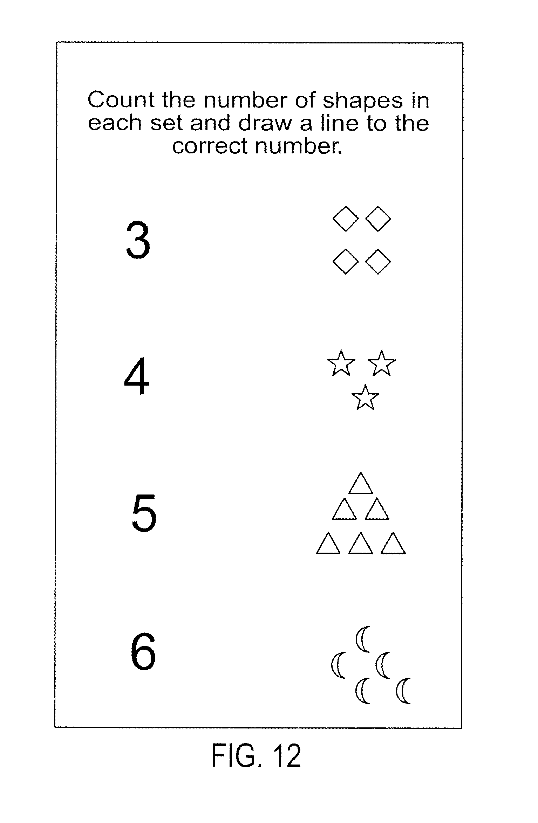

Referring to FIGURE 12, is another exemplary assessment item wherein groups of images of specific shapes are presented and the student is required to draw a line from the group of shapes to the correct numeral representing the count of the number of shapes in the picture. The system employed in the method of the present disclosure thus by image analysis identifies the direction and connection of the line drawn by the student in performing the automatic evaluation of the assessment item.

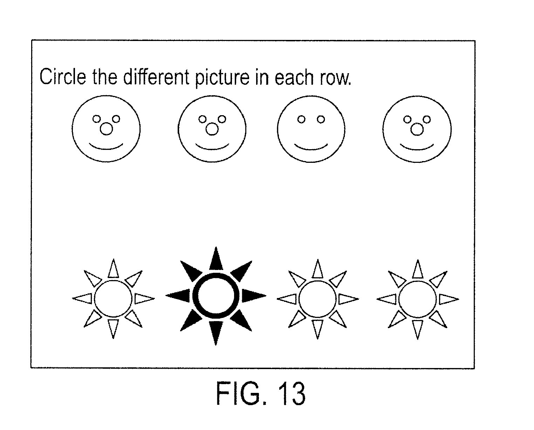

Referring to FIGURE 13, additional exemplary assessment items are illustrated in which rows of pictures are presented and the student is challenged to mark, typically by encircling, the picture among the row which is dissimilar to the remaining pictures. The system then by image analysis identifies the location of the marking and makes a determination as to whether the correct picture has been marked and automatically performs the evaluation of the assessment items.

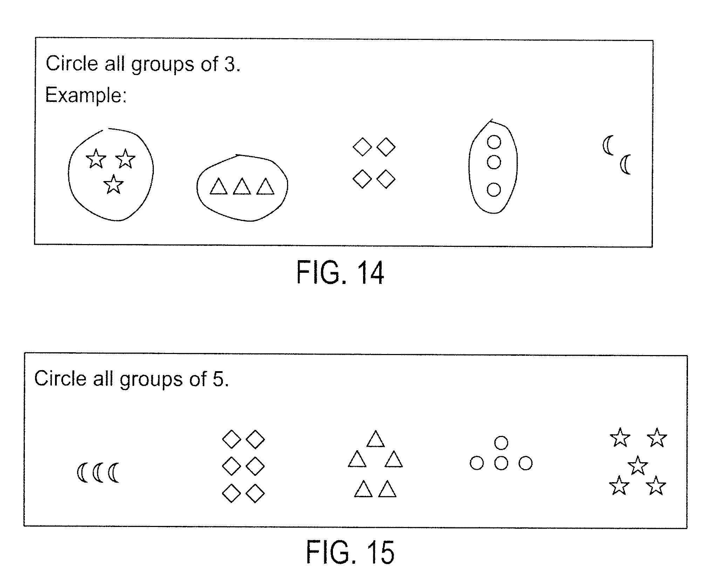

Referring to FIGURE 14, an exemplary assessment item is illustrated which has been correctly marked to show a student the manner in which the assessment item is to be performed; and, the assessment item of FIGURE 14 requires the student to mark more than one, and in the illustrated case, 3 groups of pictures containing a numerically specified group of images. The system then by image analysis, determines if the correct groups of pictures have been marked by the student.

FIGURE 15 illustrates another exemplary assessment item of the type described in FIGURE 14 and the form in which it is presented to the student for administering the assessment item.

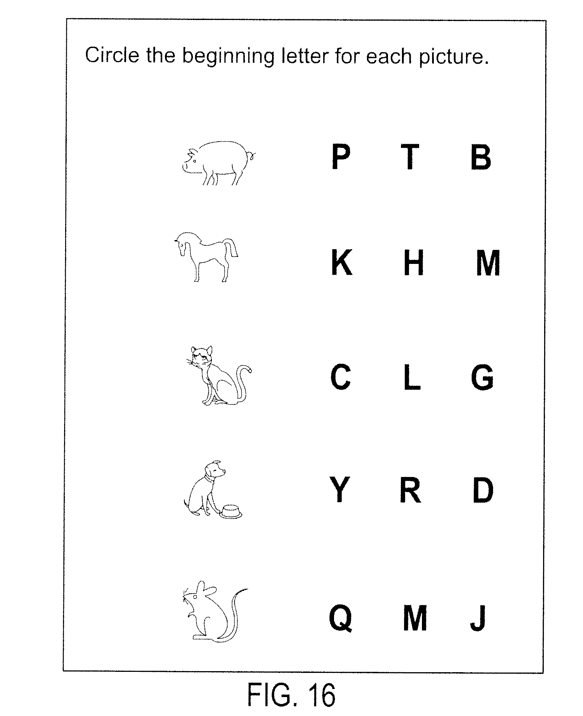

Referring to FIGURE 16, in another exemplary embodiment of assessment items is illustrated in which a group of images, such as animals, are presented, each associated with a row of letters of the alphabet and requires the student to identify the word name of the animal in the picture and to mark the appropriate letter for the beginning of the animal name. Thus, the system by image analysis determines which letter in each row has been marked and automatically performs the evaluation of the assessment items.

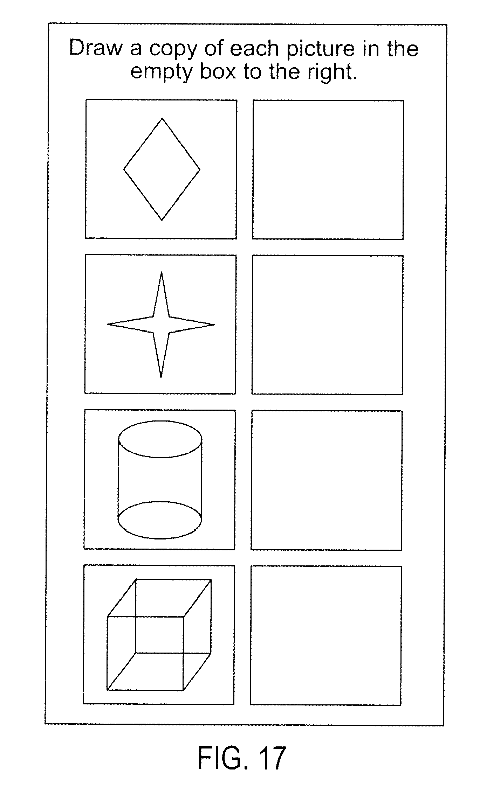

Referring to FIGURE 17, additional exemplary assessment items are shown wherein line pictures are presented and the student is challenged to manually reproduce each picture. Thus, the system by image analysis determines the degree to which the markings by the student reproduce the pictures in automatically forming an evaluation of the assessment items.

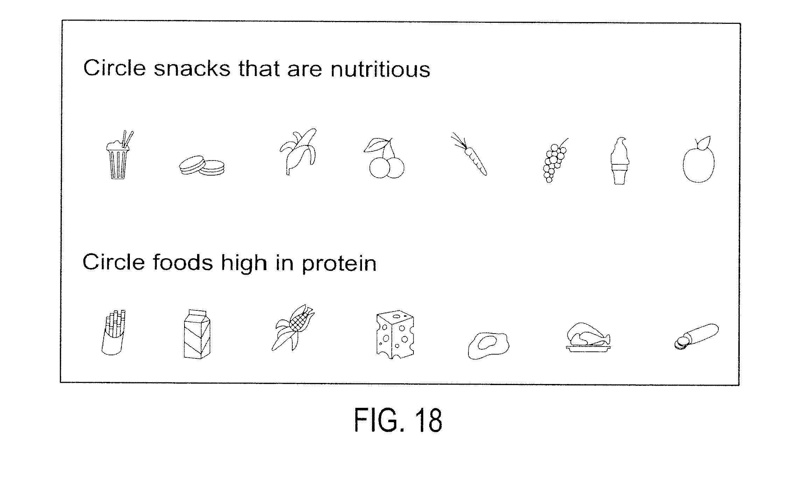

FIGURE 18 illustrates another exemplary set of assessment items in which rows of objects are presented and the student is challenged to mark, typically by encircling, the objects in a given row which are representative of a particularly specified characteristic thereby requiring the student to understand the meaning of the described characteristic and employ the described characteristic as a criteria for judging each of the illustrated objects with respect to the specified criteria. The system then by image analysis determines whether the student marking has been made of the correct object(s) and automatically evaluates the assessment items.

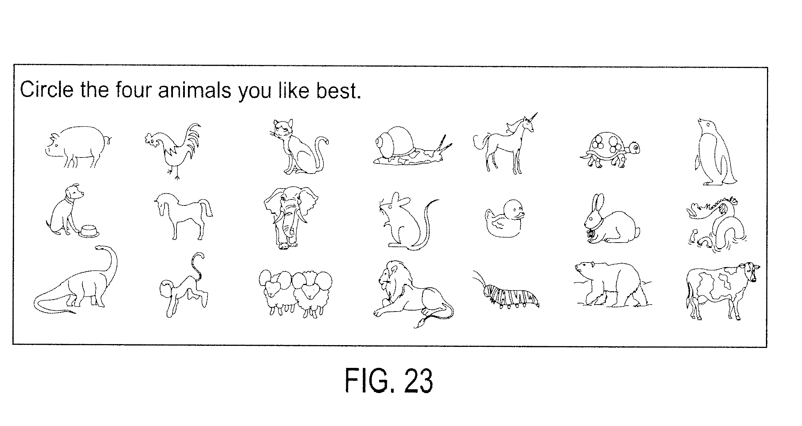

Referring to FIGURE 23, an exemplary assessment item is illustrated in which rows of pictures of various creatures are shown and the student is asked to mark, typically by encircling, a specified number of the pictures representative of those creatures for which the student has an association or favors. The system then by image analysis determines which of the pictures has been marked and automatically evaluates the student's preferences from the markings.

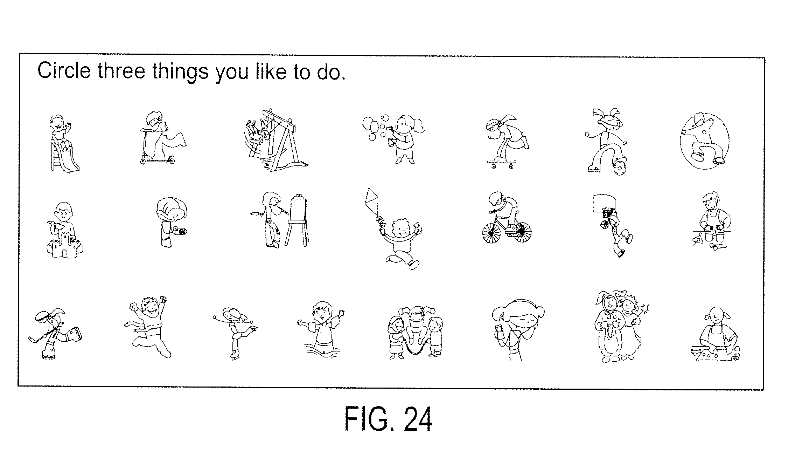

Referring to FIGURE 24, another exemplary item is illustrated in which rows of pictures of persons engaged in various activities are presented and the student is asked to mark a specified number of these activities pictorially represented. The system then by image analysis identifies the pictures marked by the student and automatically performs an evaluation to determine the student's areas of interest.

The assessment items described in FIGURES 8-16 can be utilized for either summative or formative type assessments; whereas, FIGURE 23 describes a preference type assessment and FIGURE 24 describes an interest type assessment.

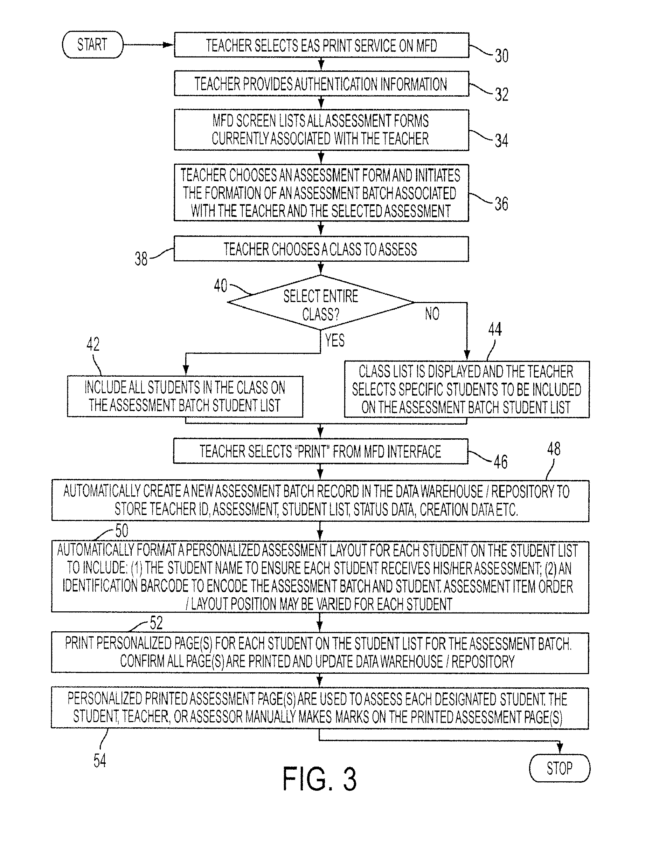

Referring to FIGURE 3, the operation of the method of the present disclosure presented in block diagram in which, at step 30 the teacher/educator selects the education assessment service (EAS) print service from the DUI (Digital User Display) of the MFD 12 and proceeds to require the teacher to provide authentication or personal identification information at step 32. At step 34 the system then proceeds to display on the MFD DUI all the pre-defined assessment forms currently associated with the teacher's identification entered in at step 32.

The teacher then chooses at step 36 an assessment form and initiates the formation of an assessment "Batch" associated with that teacher and the selected assessment form. It will be understood, that once initiated, the "Assessment Batch" comprises the basic evaluation unit or cell that the teacher has requested. The teacher then proceeds at step 38 to input a class to assess such as, for example, a seventh grade class, a seventh grade math class, a fifth grade English writing class, or a fourth grade reading class, etc. The system then proceeds to step 40 and enquires as to whether the teacher/educator wishes to select the entire class; and, if the enquiry in step 40 is answered in the affirmative, the system then proceeds to step 42 and includes all students in the class on the Assessment Batch Student List. However, if the query at step 40 is answered in the negative, the system proceeds to step 44 and the class list is displayed on the MFD DUI and the teacher selects specific students to be included on the Assessment Batch Student List.

From step 42 or step 44 the system then proceeds to step 46 and the teacher is prompted to select print from the MFD DUI. The system then proceeds to step 48 and automatically creates a new Assessment Batch record in the Data Warehouse/Repository to store the teacher's identification, the particular assessment form, the Student List, the status data, the date created, and other data which may be required by the particular school administrator/system.

The system then proceeds to step 50 and automatically formats a personalized assessment layout for each student on the Student List, which layout includes the student name to insure each student receives the correct assessment and an identification bar code to encode the Assessment Batch and the student. The assessment item order / layout for each student may be varied for each student to discourage students from looking at neighboring students' assessments for hints. The system then proceeds to step 52, prints the personalized page(s) for each student on the Student List for the Assessment Batch. The system then confirms that all page(s) are printed and updates the Data Warehouse/Repository.

At step 54, the teacher/educator takes the personalized printed assessment page(s) and administers the assessment to each designated student. The teacher/assessor or student, as the case may be, manually marks on the printed assessment page(s) the appropriate response to the challenge indicated on the particular assessment page. Upon completion of marking of the assessments, the marked assessment pages are collected by the teacher/educator for subsequent evaluation.

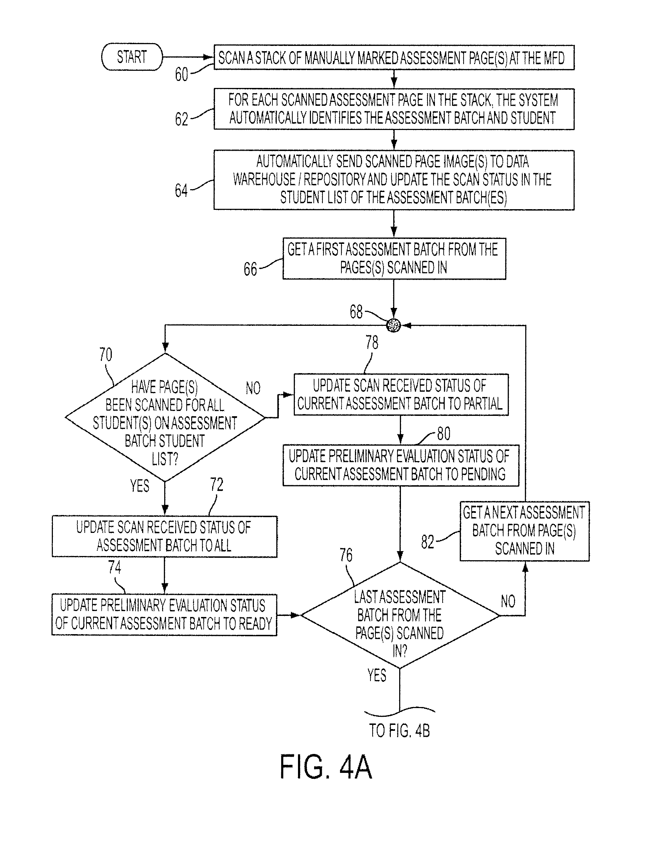

Referring to FIGURE 4A, the evaluation phase of the present method is begun wherein at step 60, the teacher/educator scans a stack of manually marked assessment pages at the MFD. At this point there may be assessment pages from multiple Assessment Batches in the stack of sheets scanned in. The system then proceeds to step 62 under the operation of the requested EAS program/function as identified in the barcode found on each assessment page; and, for each scanned assessment page in the stack, the system automatically identifies the Assessment Batch and the student. The system then proceeds to step 64 and automatically sends the scanned page image(s) to the Data Warehouse/Repository and updates the scan status in the Student List of the Assessment Batch(es). The system then proceeds to step 66 and proceeds to get the first or initial Assessment Batch from the page(s) scanned in.

The system then proceeds to junction 68 and to step 70 where the inquiry is made as to whether the page(s) have been scanned for all student(s) on the Assessment Batch Student List. If the query made at step 70 is answered in the affirmative, the system proceeds to step 72 and updates the Scan Received status of the Assessment Batch to All. The system then proceeds to step 74 and updates the Preliminary Evaluation status of the current Assessment Batch to Ready and then proceeds to step 76. If the determination at step 70 is answered in the negative, the system proceeds to step 78 and updates the Scan Received status of the Current Assessment Batch To Partial and proceeds to step 80 to update the Preliminary Evaluation Status of the Current Assessment Batch to Pending and proceeds to step 76.

At step 76, the enquiry is made as to whether the last Assessment Batch from the page(s) has been scanned in. If the enquiry at step 76 is answered in the negative, the system proceeds to step 82 and operates to Get a next Assessment Batch from page(s) scanned in and then proceeds to junction 68.

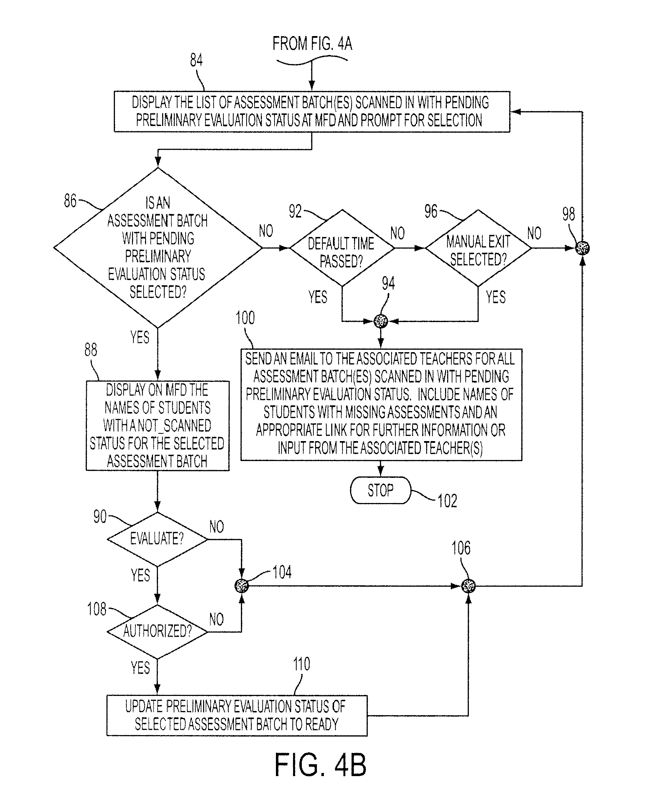

However, if the enquiry at step 76 is answered in the affirmative, the system proceeds to step 84 (see FIGURE 4B) where the system displays the list of Assessment Batch(es) scanned in with Pending Preliminary Evaluation status at the MFD DUI and prompts for selection. The system then proceeds to step 86 and enquires as to whether an Assessment Batch with Pending Preliminary Evaluation status has been selected. If the determination at step 86 is answered in the affirmative, the system proceeds to step 88 and displays on the MFD DUI the names of the students with a not_scanned status for the selected Assessment Batch. The system then proceeds to step 90.

However, if the enquiry at step 86 is answered in the negative, the system proceeds to step 92 and enquires as to whether a default time has passed. If the answer to the query at step 92 is affirmative, the system proceeds to junction 94. However, if the determination in step 92 is negative, the system proceeds to step 96 and enquires as to whether Manual Exit has been selected. If the enquiry at step 96 is answered in the affirmative, the system proceeds to junction 94. However, if the enquiry at step 96 is answered in the negative, the system proceeds to junction 98 and recycles to step 84. From junction 94, the system proceeds to step 100 and sends an email to the associated teachers for all Assessment Batch(es) scanned with Pending Preliminary Evaluation status. The names of the students with missing assessments are included and an appropriate link for further information or input from the associated teacher(s) is provided; and, the system then stops at step 102.

If the termination or query at step 90 is answered in the negative, the system proceeds to junction 104 and to junction 106 and to junction 98.

However, if the query at step 90 is answered in the affirmative, the system proceeds to step 108 and enquires as to whether the teacher/educator is authorized to request the evaluation. If the enquiry at step 108 is answered in the negative, the system proceeds to junction 104. However, if the query for authorization at step 108 is answered in the affirmative, the system proceeds to step 110 and updates the Preliminary Evaluation status of selected Assessment Batch to Ready and proceeds to junction 106.

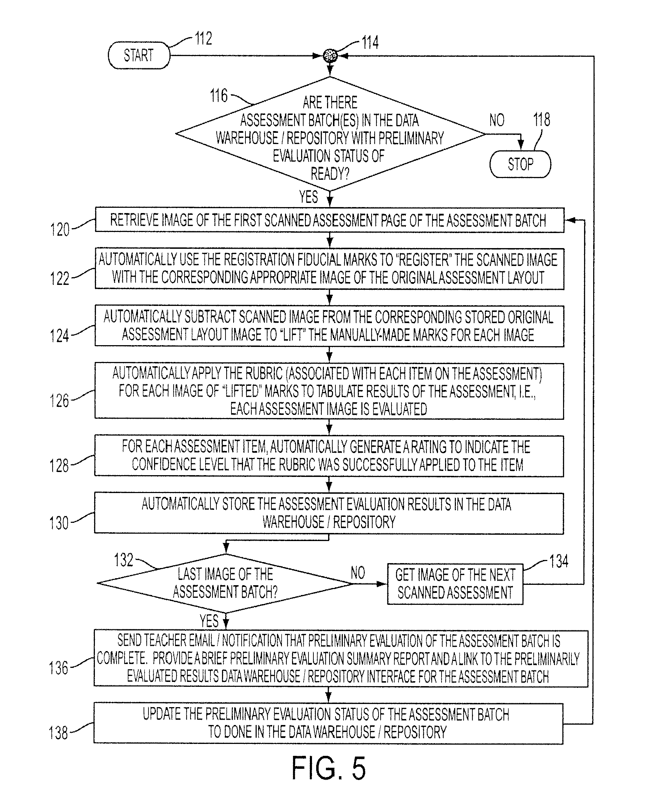

Referring to FIGURE 5, the teacher/educator initiates a query for the evaluations at step 112 and the system proceeds to junction 114 and then to step 116 and enquires as to whether there are Assessment Batch(es) in the Data Warehouse/Repository with Preliminary Evaluation status of Ready. If the query at step 116 is answered in the negative, the system proceeds to stop at step 118. However, if the query at step 116 is answered in the affirmative, the system proceeds to step 120 and retrieves the image of the first scanned assessment page of the Assessment Batch and then proceeds to step 122 and automatically uses the registration fiducial marks to "register" the scanned image with the corresponding appropriate image of the original assessment layout. The system then proceeds to step 124 and automatically subtracts the scanned image from the corresponding stored original assessment layout image to "lift" the manually made marks for each image.

The system then proceeds to step 126 and automatically applies the rubric (associated with each item on the assessment) for each image of the "lifted" marks to tabulate results of the assessment, whereupon each assessment image mark is evaluated. In doing so, the system automatically decodes each mark using analysis of the shape of the mark, the color of the mark, or the location of the mark within a field, or any combination of the color, the shape and the location of the mark within a field, where a field is a specified region located within the image of the scanned and registered assessment page. The system then proceeds to 128 and, for each assessment item, automatically generates a rating to indicate the confidence level that the rubric was successfully applied to the item. The system then proceeds to step 130 and automatically stores the assessment evaluation results in the Data Warehouse/Repository and proceeds to step 132.

At step 132, the system enquires as to whether this is the last image of the Assessment Batch. If the determination at step 132 is answered in the negative, the system proceeds to step 134 and proceeds to get the image of the next scanned assessment and proceeds to return to step 120.

However, if the query at step 132 is answered in the affirmative, the system proceeds to step 136 and sends the teacher an email/notification that preliminary evaluation of the Assessment Batch is complete and provides a brief preliminary evaluation summary report and a link to the preliminary evaluation results to the Data Warehouse/Repository interface for the Assessment Batch. The system then proceeds to step 138 and updates the Preliminary Evaluation status of the Assessment Batch to Done in the Data Warehouse/Repository. The system has thus completed the evaluation phase of the method of the present disclosure.

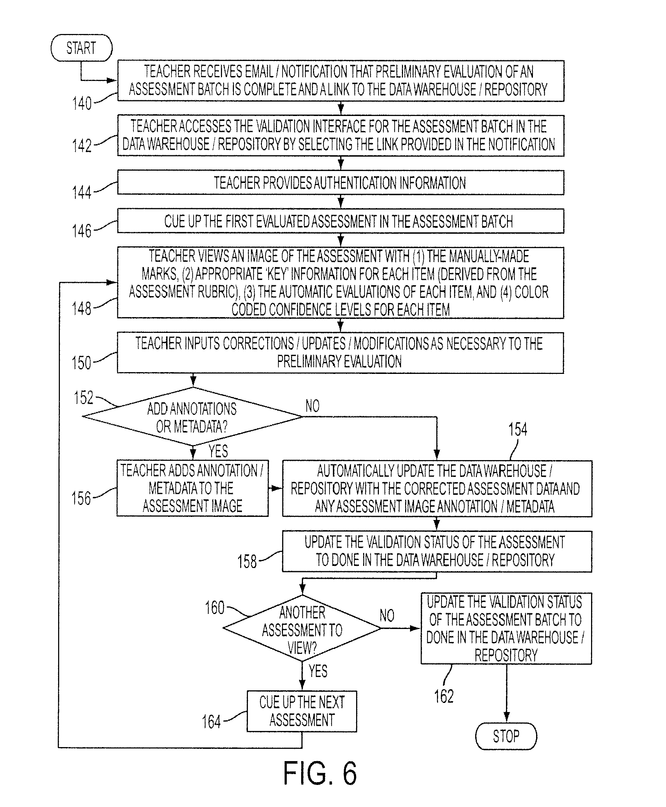

Referring to FIGURE 6, the validation phase of the present method is begun by the teacher receiving an email from the system that preliminary evaluation of an Assessment Batch is complete and a link is provided to the Data Warehouse/Repository. The system then proceeds to step 142 where the teacher accesses the Validation Interface for the Assessment Batch in the Data Warehouse/Repository by selecting the link provided in the notification.

The teacher then provides the authentication information requested at step 144 and the system proceeds at step 146 to queue up the first evaluated assessment in the Assessment Batch. At step 148, the teacher views an image of the assessment with the manually made marks, the appropriate "key" information for each item (derived from the assessment rubric), the automatic evaluations for each item and color coded confidence levels for each item. At step 150, the teacher inputs correction/updates/modifications as necessary to the preliminary evaluation; and, the system proceeds to step 152 and enquires as to whether annotations or metadata are to be added. If the enquiry at step 152 is answered by the teacher/educator in the negative, the system proceeds to step 154. However, if the enquiry at step 152 is answered in the affirmative, the teacher adds annotations/metadata to the assessment image at step 156 and the system proceeds to step 154.

At step 154, the system automatically updates the Data Warehouse/Repository with the corrected assessment data and any assessment image annotation/metadata. The system then proceeds to step 158 and updates the Validation Status of the assessment to Done in the Data Warehouse/Repository and proceeds to step 160.

At step 160, the system asks whether another assessment is to be viewed; and, if the answer to the query at step 160 is negative, the system proceeds to step 162 and updates the Validation Status of the Assessment Batch to Done in the Data Warehouse/Repository and proceeds to stop.

However, if the query at step 160 is answered in the affirmative, the system proceeds to step 164, queues up the next assessment and returns to step 148.

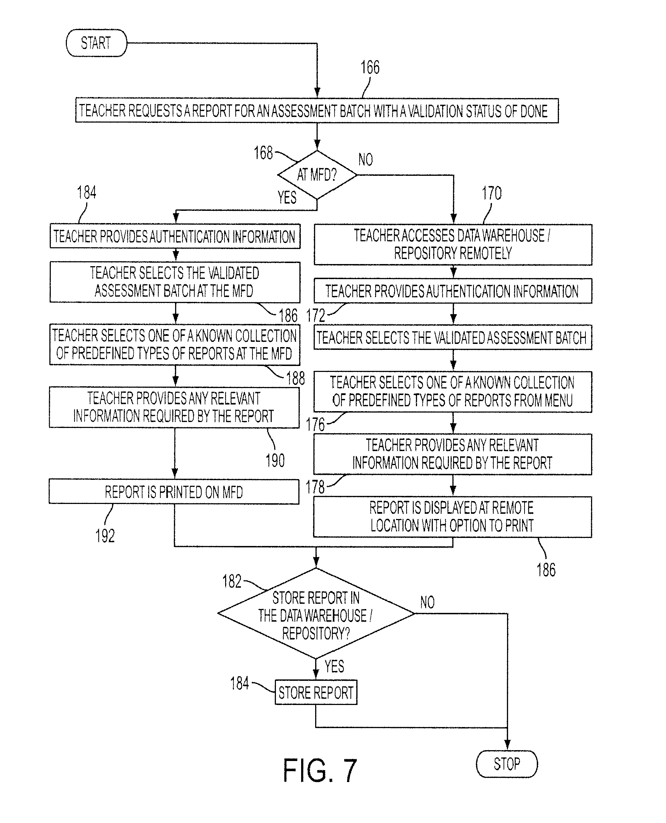

Referring to FIGURE 7, the report phase of the method of the present disclosure is shown in block diagram wherein at step 166, the teacher requests a report for an Assessment Batch with a Validation Status of Done. The system proceeds to step 168 and enquires as to whether the teacher's request was at the MFD; and, if the answer to the query is negative, the system proceeds to step 170 and the teacher accesses the Data Warehouse/Repository remotely and the system requires at step 172 for the teacher to provide authentication and identification and proceeds to step 174 where the teacher selects the validated Assessment Batch. The system then enables the teacher to select at step 176 one of the known collection of predefined types of reports from a menu and proceeds to step 178 where the teacher provides any relevant information required by the report. The system then proceeds to step 180 and the report is displayed at the remote location with option to print and the system proceeds to step 182.

If the query at step 168 is answered in the affirmative, the teacher provides authentication information at step 184 and at step 186, the teacher selects the validated Assessment Batch at the MFD DUI. Next, the teacher selects at step 188 one of the known collection of predefined types of reports at the MFD DUI and at step 190, the teacher provides any relevant information required by the report and the system proceeds to step 192 and the report is printed at the MFD and the system proceeds to step 182.

At step 182, the query is made as to whether the report is to be stored in the Data Warehouse/Repository. If the query at step 182 is answered in the negative, the system stops. However, if the enquiry at step 182 is answered in the affirmative, the system proceeds to step 184 and stores the report and proceeds to stop.

The present disclosure thus describes an automatic evaluation assessment service which employs image analysis to scanned assessments marked by either a teacher or a student and automatically evaluates the assessments employing image analysis according to established rubrics and provides reports which the teacher may print out and simultaneously updates a repository containing the assessments and personal information as to the students. The method described employs generating an Assessment Batch which includes at least one student and one assessment and a student list of selected students associated with the assessment which may include the entire class. Thus, when the assessments are marked and scanned in, evaluated and stored in the repository, the teacher/educator may validate the assessment evaluation and then subsequently retrieve this information after a period of time in which the Data Warehouse/Repository has been updated for assessments over a time period.

## Claims

1. A system for automatically helping a teacher/educator assess student(s) attributes comprising:
(a) a digital Data Warehouse/Repository (DW/R) of assessments and personal information for the student(s);
(b) a digital user interface (DUI) operatively connected for enabling a teacher/educator to select an assessment from the DW/R;
(c) a multifunction device (MFD) including a scanner and a computer communicating with the DUI and DW/R, and operative to generate upon request of the DUI an assessment form with personalized student information thereon;
wherein a scanner operative to generate a digital image of the assessment form after marking and to send the image to the computer and the computer is operative to recognize the markings in the image and to automatically evaluate the marked assessment according to stored rubrics and to provide, upon request, a report of the evaluation.

2. The system defined in claim 1, wherein the computer is operative to automatically create an Assessment Batch having a list of named students associated with an assessment, or is operable to provide an Assessment Batch having a list of named students from one of (a) a class, (b) a plurality of classes, (c) a grade level, (d) a school and (e) a plurality of schools.

3. The system defined in claim 1 or claim 2, wherein the computer is operative to color code confidence levels for the evaluation of each item in the report.

4. A system according to any of the preceding claims, wherein the computer is further adapted to carry out the steps of:
(i) automatically printing a personalized assessment from the generated image to be manually marked for the at least one student;
(ii) administering the assessment to the at least one student for marking and scanning and digitally storing the marked assessment;
(iii) automatically decoding information relating to the student's attributes from one of (a) the shape of the manually made marks, (b) the color, (c) the location within a field and (d) the combination of the shape, the color and the location within a field;
(iv) automatically performing an evaluation of the student's attributes from the assessment with predetermined rubrics; and
(v) automatically informing the teacher/educator that the assessment evaluation has been performed.

5. A method of automatically helping a teacher/educator assess the attributes of at least one student comprising:
(a) providing a digital Data Warehouse/Repository of assessments and personal information for at least one student;
(b) providing a digital user interface (DUI) and selecting an assessment at the DUI from the Data Warehouse/Repository;
(c) automatically generating an assessment image with personalized information from the Repository for the at least one student;
(d) automatically printing a personalized assessment from the generated image to be manually marked for the at least one student;
(e) administering the assessment to the at least one student for marking and scanning and digitally storing the marked assessment;
(f) automatically decoding information relating to the student's attributes from one of (a) the shape of the manually made marks, (b) the color, (c) the location within a field and (d) the combination of the shape, the color and the location within a field;
(g) automatically performing an evaluation of the student's attributes from the assessment with predetermined rubrics; and,
(h) automatically informing the teacher/educator that the assessment evaluation has been performed.

6. The method defined in claim 5, wherein the step of automatically performing an evaluation includes automatically updating the Data Warehouse/Repository.

7. The method defined in claim 5 or claim 6, wherein the step of automatically decoding information includes determining that a certain mark cannot be decoded.

8. The method defined in any of claims 5 to 7, further comprising:
(a) entering teacher/educator validation of the assessment evaluation remotely; and,
(b) automatically updating the Data Warehouse/Repository with the validation.

9. The method defined in any of claims 5 to 8, further comprising scanning and entering predefined assessments into the Data Warehouse/Repository.
